# EUROPEAN PATENT SPECIFICATION

(11) **EP 2 947 960 B1**
(45) Date of publication and mention of the grant of the patent: **26.08.2020**
(21) Application number: 14741012.0
(22) Date of filing: 16.01.2014
(51) Int. Cl.: H05B 6/12, F21S 2/00, F21V 8/00

(54) **INDUCTION COOKING DEVICE**
INDUKTIONSKOCHVORRICHTUNG
DISPOSITIF DE CUISSON PAR INDUCTION

(30) Priority: 17.01.2013 JP 2013006016
(43) Date of publication of application: 25.11.2015
(73) Proprietor: Panasonic Intellectual Property Management Co., Ltd., Osaka-shi, Osaka 540-6207 (JP)
(72) Inventor: TAKENAKA, Kazuhiko, Osaka-shi, Osaka 540-6207 (JP); KUWAMURA, Hirosi, Osaka-shi, Osaka 540-6207 (JP); WATANABE, Noriaki, Osaka-shi, Osaka 540-6207 (JP)
(74) Representative: Eisenführ Speiser
(86) International application number: PCT/JP2014/000195
(87) International publication number: WO 2014/112379

(56) References cited:
- EP-A1- 0 499 972
- JP-A- 2004 335 481
- JP-A- 2009 059 493
- JP-A- 2009 187 927
- JP-A- 2011 123 109
- JP-A- 2011 198 623
- JP-A- 2011 237 484
- US-A1- 2012 321 290

## Description

### Technical Field

The present invention relates to an induction heating cooker for use in a standard home.

### Background Art

Conventionally, a variety of induction heating cookers are known as induction heating cookers of this kind. By way of example, there exists an induction heating cooker including a translucent top plate mounted on an upper surface of a body casing, a heating portion provided in the top plate to place thereon a cooking container to be heated to heat the cooking container by induction heating, an induction heating coil disposed below the top plate in association with the heating portion, and a linear luminous body mounted on an outer peripheral portion of the induction heating coil to emit light toward the top plate (in an upward direction) along an outer periphery of the induction heating coil.

The linear luminous body of such a conventional induction heating cooker includes a light guide body formed into an annular shape, a plurality of light lead-in portions each formed at a portion of the light guide body, and a plurality of light sources. The light guide body has a square cross-sectional shape having two short sides and two long sides longer than the short sides to guide light. The light guide body also has a configuration in which a surface on the side of one of the short sides in the square cross-sectional shape is employed as a light emitting surface for emitting light outside, on which surface light from the light sources falls, a light-reflecting layer is formed on a surface opposed to the light emitting surface, and a direction along the long sides is employed as a thickness direction. Because the linear luminous body has such a configuration, it can emit light along the outer periphery of the induction heating coil and display the heating portion on the top plate.

JP 2004-335481 A discloses an induction heating cooker provided with a light guiding body along an outer peripheral part of an induction heating coil to display the corresponding heating range. A light source is inserted into the light guiding body in the length direction of the light guiding body. A similar arrangement is also known from EP 0 499 972 A1.

### Patent Document(s)

Patent Document 1: JP 2003-15560 A
Patent Document 2: JP 2004-335481 A
Patent Document 3: EP 0 499 972 A1

### Summary of the Invention

### Problems to be solved by the Invention

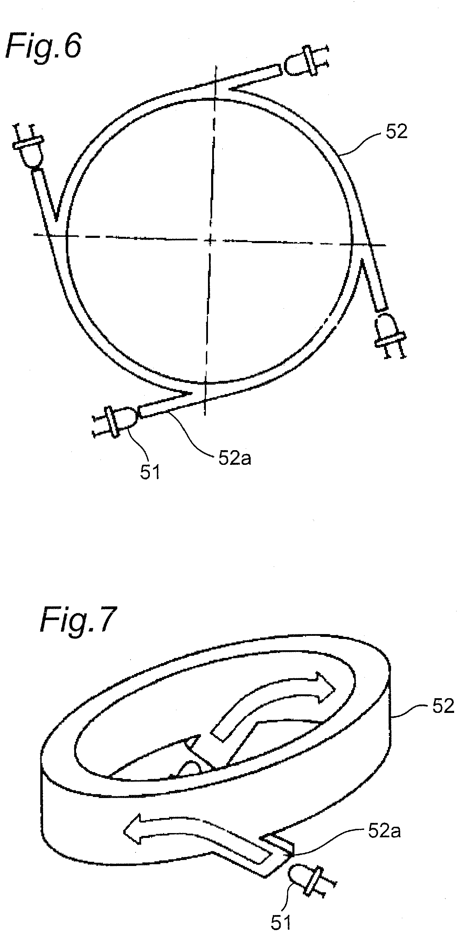

In the configuration of the conventional linear luminous body referred to above, as shown in Fig. 6 and Fig. 7, a bullet-shaped LED 51 is used as each light source. The bullet-shaped LED 51 has a viewing angle in the range from 30 degrees to 60 degrees. In order to uniformly diffuse light that has entered the light guide body 52 from the bullet-shaped LED 51, a distance taking the viewing angle into account is required. For this reason, as shown in Fig. 6 and Fig. 7, a plurality of light lead-in portions 52a connected to the annular light guide body 52 from outside are provided and a configuration is employed in which the bullet-shaped LEDs 51 and a corresponding number of substrates each having one of the bullet-shaped LEDs 51 mounted thereon are connected to end portions of respective light lead-in portions 52a. However, such a configuration in which the plurality of light lead-in portions 52a are connected to the annular light guide body 52 poses a problem of requiring much space for installation of the linear luminous body.

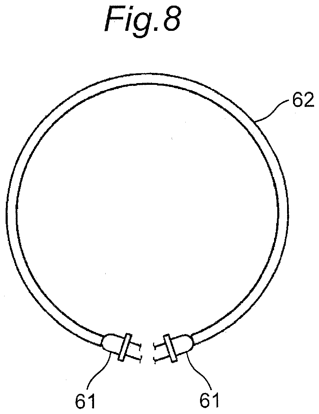

Also, as shown in Fig. 8, in applications where two bullet-shaped LEDs 61 are provided so as to allow light to circumferentially enter a generally annular light guide body 62 from opposite ends thereof, a linear luminous body cannot be brightened at a location of installation of each bullet-shaped LED 61. Accordingly, the light guide body 62 of such a configuration cannot lighten the whole circumference without interruption.

Further, the use of the bullet-shaped LEDs as the light sources inevitably causes a variation in angle or position of the light sources due to, for example, the degree of bend of terminal legs of the bullet-shaped LEDs or a variation in the manufacturing accuracy or installation of the substrates. Accordingly, the conventional linear luminous body referred to above poses a problem that there is a large variation or loss of light at incident portions of light from the light sources to the light guide body.

The present invention has been developed in view of the problems inherent in the prior art and is intended to provide an induction heating cooker capable of realizing a linear luminous body that can emit light nearly uniformly in the form of an annular or circular arc shape, conserve space, reduce a variation, which may be caused by assemblage, and easily obtain a clear and linear shape, and of clearly displaying a heating range of an induction heating coil.

### Means to Solve the Problems

An induction heating cooker embodying the present invention is defined in claim 1.

### Effects of the Invention

According to the present invention, a linear luminous body can be obtained that can emit light nearly uniformly in the form of an annular or circular arc shape, conserve space, reduce a variation, which may be caused by assemblage, and easily obtain a clear and linear shape. Accordingly, an induction heating cooker capable of clearly displaying a heating range of an induction heating coil can be provided.

### Brief Description of the Drawings

Fig. 1 is a perspective view of an induction heating cooker according to a first embodiment of the present invention.
Fig. 2 is an exploded perspective view of a linear luminous body employed in the first embodiment.
Fig. 3 is a partially enlarged perspective view of the linear luminous body of Fig. 2 around a light source.
Fig. 4 is a perspective view of the linear luminous body according to the first embodiment as viewed from below.
Fig. 5 is a partial cross-sectional view of the linear luminous body of Fig. 4 as viewed from a direction A.
Fig. 6 is a view of a conventional linear luminous body.
Fig. 7 is another view of the conventional linear luminous body.
Fig. 8 is a view of another conventional linear luminous body.

### Embodiments for Carrying out the Invention

An induction heating cooker according to the first embodiment for carrying out the invention comprises: a body casing; a translucent top plate mounted on an upper surface of the body casing; an induction heating coil operable to heat a cooking container placed on the top plate by induction heating; a linear luminous body provided at an outer periphery of the induction heating coil as viewed from above the top plate to emit light along a portion or an entire periphery of the induction heating coil; the linear luminous body comprising a light source and an annular or circular arc light guide body, the light source having a chip LED; and the light guide body having an insertion portion through which the light source is disposed within the light guide body; wherein light from the light source disposed inside the insertion portion enters the light guide body through a side surface of the insertion portion, and an upper surface of the light guide body is a light emitting surface.

By this configuration, a linear luminous body can be obtained that can emit light nearly uniformly in the form of an annular or circular arc shape, conserve space, reduce a variation, which may be caused by assemblage, and easily obtain a clear and linear shape. Accordingly, an induction heating cooker capable of clearly displaying a heating range of an induction heating coil can be provided.

In the induction heating cooker according to the first embodiment for carrying out the invention, the second embodiment for carrying out the invention is characterized in that in the light guide body, light lead-in portions adjacent to the insertion portion in a circumferential direction of the light guide body are continuous through a light lead-in portion positioned between the upper surface of the light guide body and the insertion portion.

In this configuration, because the light lead-in portions are continuous in the groove or through-hole of the light guide body in which the light source is disposed, the annular or circular arc shape can be brightened nearly uniformly and continuously, thus making it possible to obtain a linear luminous body capable of easily obtaining a clear and linear shape.

In the induction heating cooker according to the first embodiment for carrying out the invention, the insertion portion of the light guide body is a groove formed in a bottom surface of the light guide body or a through-hole extending through an inner peripheral surface and an outer peripheral surface of the light guide body and, in the light guide body, a portion of the upper surface of the light guide body opposed to the insertion portion is also a portion of the light emitting surface.

In this configuration, because the light lead-in portions are continuous in the groove or through-hole of the light guide body in which the light source is disposed, the annular or circular arc shape can be brightened nearly uniformly and continuously, thus making it possible to obtain a linear luminous body capable of easily obtaining a clear and linear shape.

In the induction heating cooker according to any one of the first to second embodiments for carrying out the invention, the third embodiment for carrying out the invention is characterized in that the light source comprises a substrate and two chip LEDs mounted on respective surfaces of the substrate and light from each chip LED enters the light guide body through opposed side surfaces of the insertion portion of the light guide body. This configuration can efficiently secure an amount of light with the light source provided at a single site of the light guide body and, also, achieve space saving.

In the induction heating cooker according to any one of the first to third embodiments for carrying out the invention, the fourth embodiment for carrying out the invention is characterized in that the light source comprises a substrate and a chip LED mounted on the substrate, a width dimension of the insertion portion in a circumferential direction of the light guide body is set in conformity with a thickness dimension of the substrate and that of the chip LED, and a position of the light source is regulated by the insertion portion. This configuration can regulate the position of the light source by means of the insertion portion and reduce a loss of incident light that may be cause by a variation in position of the light source.

Embodiments of the present invention are described hereinafter with reference to the drawings, but the present invention is not limited by the embodiments.

### (Embodiment 1)

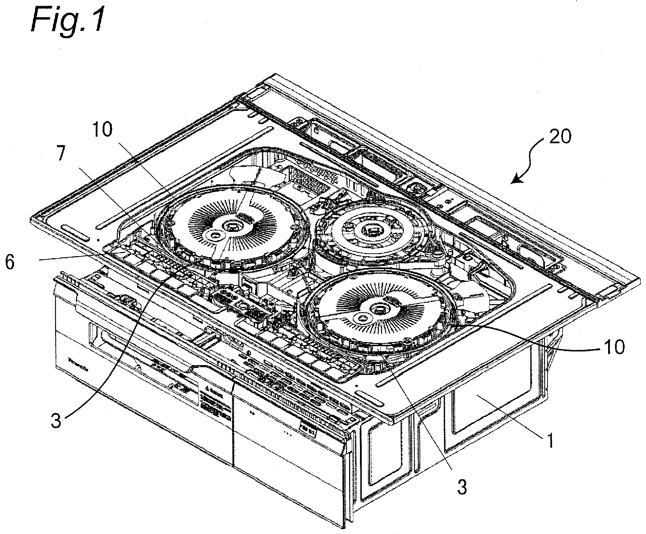

Fig. 1 is a perspective view of an induction heating cooker 20 according to a first embodiment of the present invention. As shown in Fig. 1, the induction heating cooker 20 includes a body casing 1 and a translucent top plate (not shown) mounted on an upper surface of the body casing 1. Within the body casing 1, a plurality of induction heating coils 3 for induction heating an object to be heated (a cooking container to be heated) such as, for example, a pan placed on the top plate, an inverter (not shown) for supplying the induction heating coils 3 with a high-frequency current, a controller and the like are disposed. Also, within the body casing 1, a cooling fan (not shown) for cooling the induction heating coils 3 and the inverter is disposed.

Further, the induction heating cooker 20 includes a plurality of linear luminous bodies 10 disposed in association with respective induction heating coils 3 to indicate an induction-heatable range (heating range) and an operation display 6 for displaying a set state of the appliance, the operation display 6 being manipulated by a user for the setting of a heating power and the like.

Induction heating cookers use no fire unlike gas cookers or the like and accordingly have the advantage of being safe and easy to clean, but because no fire is used, the user cannot always recognize that an induction heating cooker is in use. In view of this, the linear luminous bodies 10 are provided so that when the induction heating cooker according to the present invention is in use, an outer peripheral portion of the induction heating coil 3 in use may shine in the form of a circle or circular arc as viewed from above the appliance. The user can recognize the induction heating coil 3 in use by viewing light from the linear luminous body 10 accommodated within the body casing 1 from above the top plate.

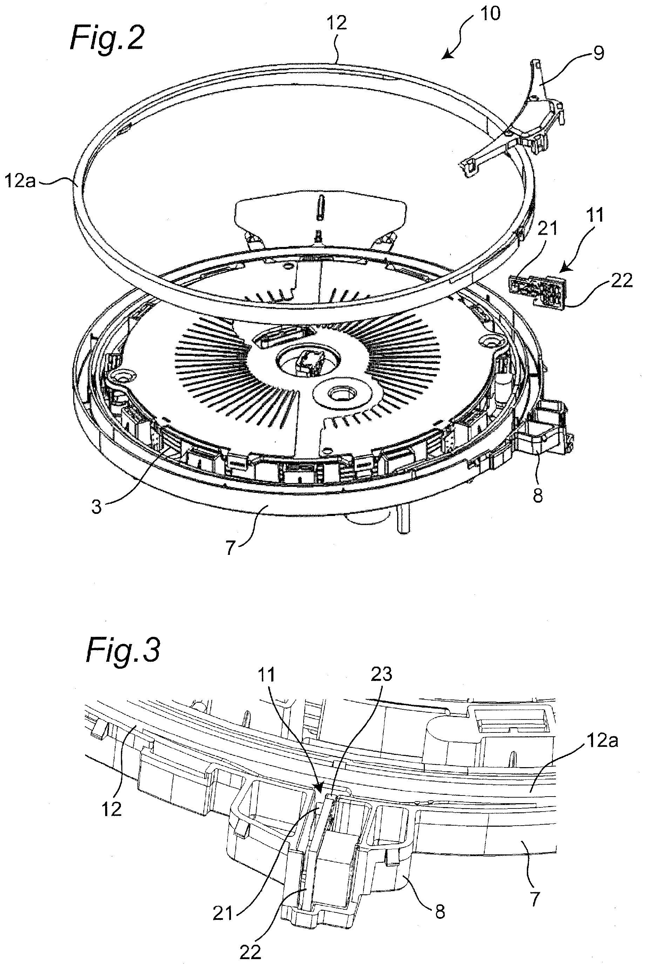

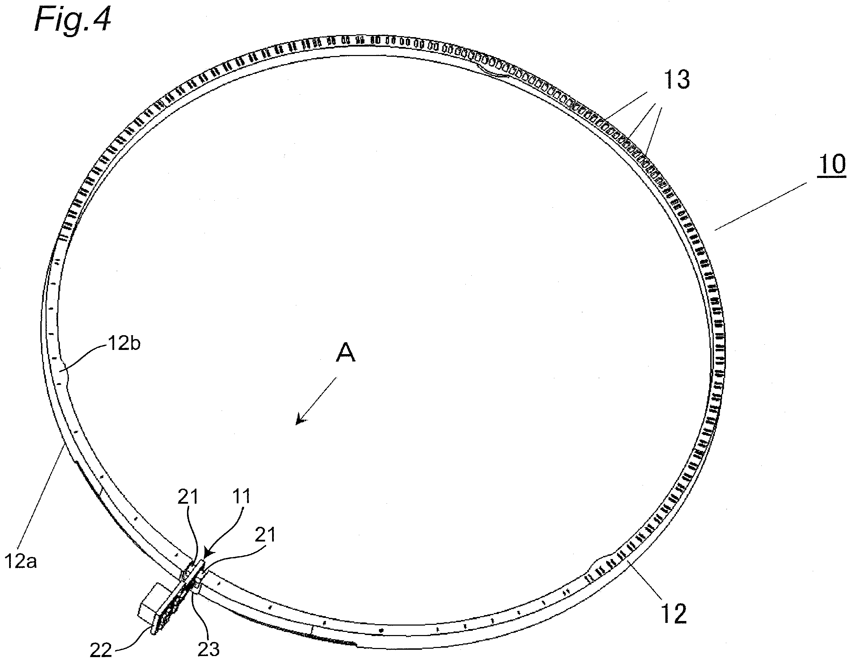

Fig. 2 is an exploded perspective view of one of the linear luminous bodies 10 of the induction heating cooker 20 according to the first embodiment. Fig. 3 is a partially enlarged perspective view of the linear luminous body 10 of Fig. 2 around a light source and Fig. 4 is a perspective view of the linear luminous body 10 as viewed from below.

As shown in Fig. 2, each linear luminous body 10 is provided with a light source 11 and a light guide body 12.

A light bulb or an LED (Light Emitting Diode) is used for the light source 11 and, in particular, the use of the light emitting diode is preferred because it has a variety of luminescent colors and can be accordingly selected depending on the intended use. In this first embodiment, a chip LED (surface-mounted LED) 21 is used for the light source 11 and, for example, two chip LEDs 21 are respectively mounted on both surfaces of a substrate 22.

The light guide body 12 is intended to guide light that has entered from the light source 11. The light guide body 12 has an annular outer shape and is disposed on an outer side of a corresponding one of the induction heating coils 3. The light guide body 12 has a square cross-sectional shape and an upper surface thereof is a light emitting surface 12a. The light guide body 12 is formed of a synthetic resin such as an acrylic resin, polycarbonate, polyamide, polyimide or the like or of a transparent material such as glass. As shown in Fig. 2 and Fig. 3, the light guide body 12 is inserted into and fixed in a groove defined in, for example, an annular coil base 7 that holds the induction heating coil 3.

Also, as shown in Fig. 4, the light guide body 12 has a plurality of light-reflecting grooves 13 formed in a bottom surface 12b thereof. The light-reflecting grooves 13 are intended to diffusely reflect light guided within the light guide body 12 and can effectively and diffusely reflect the guided light, for example, by setting the number and the density of the light-reflecting grooves 13 depending on the distance from the light source 11. The bottom surface 12b of the light guide body 12 may be roughened to diffusely reflect light or have a plurality of stepped portions to scatter light.

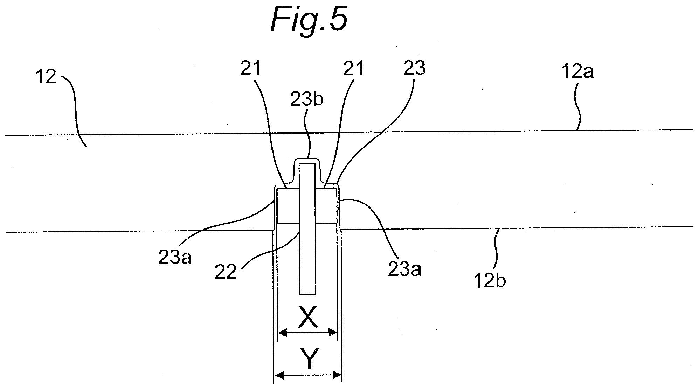

Also, the light guide body 12 has a groove 23 defined in a portion of the annular shape so as extend in a height direction from the bottom surface (lower surface) 12b side. Fig. 5 is a partially enlarged view (partial cross-sectional view) of the linear luminous body 10 as viewed from a direction A in Fig. 4.

As shown in Fig. 5, the groove 23 is formed in the bottom surface 12b of the light guide body 12 so as to extend toward the upper surface (light emitting surface12a) side. The groove 23 is formed in conformity with the thickness size of the substrate 22 and that of the chip LEDs 21 so that the substrate 22 and the chip LEDs 21 mounted on both surfaces thereof may be inserted into the groove 23. Opposite side surfaces 23a of the groove 23 are incident planes 23a (light lead-in portions) on which light from the chip LEDs 21 is incident. Also, there exists a light guide portion between a bottom surface 23b of the groove 23 and the light emitting surface 12a of the light guide body 12. For this reason, portions of the light guide body 12 adjacent to the opposite side surfaces 23a of the groove 23 are continuous with each other via the light guide portion between the bottom surface 23b of the groove 23 and the light emitting surface 12a of the light guide body 12. That is, in the annular light guide body 12, an upper portion opposed to the bottom surface 23b of the groove 23 is also a portion of the light emitting surface 12a and, accordingly, the light emitting surface 12a is annularly continuous.

As just described, the substrate 22 and the chip LEDs 21 are inserted into the groove 23 formed in the bottom surface 12b of the light guide body 12 to thereby place the light source 11 within the light guide body 12. In the first embodiment, the groove 23 formed in the bottom surface 12b of the light guide body 12 is an example of an insertion portion through which the light source 11 (the substrate 22 and the chip LEDs 21) is placed within the light guide body 12.

As shown in Fig. 2 and Fig. 3, a portion of the substrate 22 is inserted into the groove 23 in the light guide body 12 and the other portion of the substrate 22 is supported by a substrate holder 8 mounted on the coil base 7. Also, the other portion of the substrate 22 is connected to component parts such as, for example, connectors. A light shielding cover 9 is mounted on the substrate holder 8 to avoid light leak from portions other than the light emitting surface 12a of the light guide body 12 in proximity to the substrate holder 8.

The operation and function of the linear luminous body 10 of the above-described configuration are explained hereinafter.

When a user starts heating using one of the induction heating coils 3 by operating the operation display 6, the controller sends a signal to turn on the chip LEDs 21 of the linear luminous body 10 corresponding to the induction heating coil 3 that has started heating.

In this event, light from the light source 11 enters the light guide body 12 through the side surfaces (incident planes 23a (light lead-in portions)) of the groove 23 and is then guided within the light guide body 12. A portion of the light is guided along the circumferential direction of the light guide body 12 while being diffusely reflected by the light-reflecting grooves 13 formed in the bottom surface of the light guide body 12 so as to uniformly diffuse within the light guide body 12. The light so diffusely reflected is directed toward the light emitting surface 12a opposed to the light-reflecting grooves 13 and emitted outside through the light emitting surface 12a. As a result, clear, linear and annular light emission can be obtained along the circumferential direction of the light guide body 12 (the direction of travel of light).

Also, the chip LEDs 21 are mounted on respective surfaces of the substrate 22 and light from each chip LED 21 enters the light guide body 12 from the circumferential direction of the light guide body 12 with the opposite side surfaces of the groove 23 as the incident planes 23a. Accordingly, a given amount of light can be secured by the two chip LEDs 21. Further, because the chip LEDs 21 are used for the light source 11, considerable space saving can be achieved compared with the conventional structure with the use of the bullet-shaped LEDs. Accordingly, even if the light source 11 is positioned in a portion of the annular light guide body 12 as in the first embodiment, a variation of light as viewed from above, which may be caused by the structure of the light source11, can be minimized.

Also, as shown in Fig. 5, the width dimension Y of the groove 23 in the light guide body 12 in the circumferential direction of the light guide body 12 is set to nearly the same dimension as the thickness dimension X of the structure of the substrate 22 having the chip LEDs 21 mounted on respective surfaces thereof (the total thickness dimension of the substrate 22 and the two chip LEDs 21). Because of this, the light source 11 can be positioned with respect to the light guide body 12 merely by inserting the substrate 22 with the chip LEDs 21 mounted thereon into the groove 23.

By so doing, a variation in position of the component parts can be considerably reduced and a loss of light, which may be caused by such a variation in position at the incident portions of light, can be also reduced. That is, the side surfaces of the groove 23 for positioning the light source 11 are the incident planes 23a and the light source 11 is directly positioned with respect to these incident planes 23a. For this reason, the positioning accuracy can be enhanced compared with indirect positioning.

Also, in the case where a plurality of light sources have been provided so far, there has been a need to provide the same number of light lead-in portions as the light sources, but in the linear luminous body 10 according to the first embodiment, two chip LEDs 21 can be placed in, for example, a single groove 23 formed in the light guide body 12. Because it is sufficient if the width dimension Y of the groove 23 is nearly the same as the total thickness dimension of the substrate 22 and the two chip LEDs 21 (the thickness dimension X) for insertion thereof, the width dimension Y of the groove 23 is set to, for example, about 7-8 mm. Also, the width dimension Y of the groove 23 is preferably set so that no pressure is applied to the chip LEDs 21 through the incident planes 23a when the substrate 22 and the chip LEDs 21 have been inserted.

As shown in Fig. 5, the groove 23 may have two portions of different widths, one of which corresponds to the thickness of the substrate 22 and the other of which corresponds to the total thickness of the substrate 22 and the chip LEDs 21. In this configuration, if the positioning of the chip LEDs 21 within the groove 23 is performed by bringing the substrate 22 into contact with a bottom surface of the portion corresponding to the thickness of the substrate 22, the positioning of the light source 11 can be positively performed while protecting the chip LEDs 21.

The chip LEDs 21 have a viewing angle greater than that of the bullet-shaped LEDs. By way of example, the bullet-shaped LEDs have a viewing angle of only about 30 degrees, but the chip LEDs 21 have a viewing angle of about 150 degrees. Accordingly, in order to uniform the light-emitting state, it is not necessary to enlarge the light lead-in portions and place them a distance away from the light source unlike the conventional structure, and light that has entered the light guide body 12 from the chip LEDs 21 diffuses a short distance in the thickness direction of the light guide body 12. For this reason, in the first embodiment, the chip LEDs 21 can be respectively placed adjacent to the side surfaces 23a of the groove 23. That is, in the conventional structure employing the bullet-shaped LEDs, as shown in Fig. 6 and Fig. 7, they must be placed at least about 10 mm away from the light emitting surface to obtain uniform light emission at the light emitting surface and, hence, the light lead-in portions must be enlarged, but the use of the chip LEDs can obtain uniform light emission by placing them only about 1-2 mm away from the light emitting surface. Accordingly, even if the chip LEDs 21 are disposed in a portion of the annular light guide body 12, only a portion of the light emitting surface 12a above the chip LEDs 21 is darkened just a bit. If the amount of light at the light emitting surface 12a above the chip LEDs 21 is insufficient, surface texturing (surface roughening) applied to this portion can scatter light, thus resulting in uniform light emission. Also, because the light lead-in portions are annularly continuous in the light guide body 12, light guided within the light guide body 12 partially returns back to this portion and the brightness is accordingly ensured.

It is to be noted here that the term "uniform light emission" referred to in the present invention is defined not as being optically uniform, but as being nearly uniform in physical appearance or actual sensation.

Also, as shown in Fig. 5, in the annular light guide body 12, the upper surface opposed to the bottom surface 23b of the groove 23 is also a portion of the light emitting surface 12a, which is accordingly annularly continuous. That is, the light emitting surface 12a of the light guide body 12 is annularly formed without interruption as viewed from above, thus making it possible to reduce a variation of light and nearly uniformly lighten the circumference of the annular light guide body 12.

In the first embodiment referred to above, the case where the linear luminous body 10 is provided with the annular light guide body 12 has been described as an example, but the present invention is not limited to only such a case. In place of the light guide body that is continuous along the entire circumference, a circular arc light guide body may be used. In this case, a groove is formed in a portion of the circular arc light guide body and a light source is disposed within the groove.

Also, in the first embodiment referred to above, the light source 11 has been described as including two chip LEDs 21 mounted on respective surfaces of the substrate 22, but a chip LED mounted on only one surface of a substrate may be used as a light source.

Further, in the first embodiment referred to above, the groove 23 formed in the bottom surface 12b of the light guide body 12 has been described as being an insertion portion that is used for insertion of the light source 11 (the substrate 22 and the chip LEDs 21) into the light guide body 12, the present invention is not limited to only such a case. By way of example, a through-hole extending through an inner peripheral surface and an outer peripheral surface of an annular or circular arc light guide body may be provided as an insertion portion so that a substrate and a chip LED may be inserted into the through-hole. In this case, inner side surfaces of the through-hole positioned in the circumferential direction of the light guide body are incident planes of light into the light guide body. Also, even if the through-hole is employed as the insertion portion in this manner, an upper surface portion of the light guide body opposed to an inner surface (upper inner surface) of the through-hole is also a portion of the light emitting surface, which is accordingly annularly continuous. For this reason, the light emitting surface of the light guide body can be annularly formed without interruption as viewed from above. The direction in which the through-hole extends is not limited to a horizontal direction, but may be a direction inclined with respect to the horizontal direction.

Any combination of the various embodiments referred to above can produce respective effects.

Although the present invention has been fully described by way of preferred embodiments with reference to the accompanying drawings, it is to be noted here that various changes and modifications will be apparent to those skilled in the art. Therefore, unless such changes and modifications otherwise depart from the scope of the present invention as set forth in the appended claims, they should be construed as being included therein.

### Industrial Applicability

As described above, the present invention can provide a highly reliable linear luminous body of a simple structure capable of easily obtaining clear and linear light emission and, also, with the use of this linear luminous body, a heating range can be clearly displayed on a top plate of a stationary induction heating cooker or an induction heating cooker that can be incorporated into a kitchen counter.

### Explanation of Reference Numerals

- 1: body casing
- 3: induction heating coil
- 6: operation display
- 7: coil base
- 10: linear luminous body
- 11: light source
- 12: light guide body
- 12a: light emitting surface
- 12b: bottom surface
- 13: light-reflecting groove
- 20: induction heating cooker
- 21: chip LED
- 22: substrate
- 23: groove
- 23a: incident plane

## Claims

1. An induction heating cooker (20) comprising:
a body casing (1);
a translucent top plate mounted on an upper surface of the body casing (1);
an induction heating coil (3) operable to heat a cooking container placed on the top plate by induction heating;
a linear luminous body (10) provided at an outer periphery of the induction heating coil (3) as viewed from above the top plate to emit light along a portion or an entire periphery of the induction heating coil (3);
the linear luminous body (10) comprising a light source (11) and an annular or circular arc light guide body (12); and
the light guide body (12) having an insertion portion through which the light source (11) is disposed within the light guide body (12),
wherein light from the light source (11) disposed inside the insertion portion enters the light guide body (12) through a side surface of the insertion portion, and an upper surface of the light guide body (12) is a light emitting surface (12a),
**characterized in that**
the linear luminous body (10) comprises a chip LED (21) as the light source and the insertion portion of the light guide body (12) is a groove (23) formed in a bottom surface (12b) of the light guide body (12) or a through-hole extending through an inner peripheral surface and an outer peripheral surface of the light guide body (12), and **in that**, in the light guide body (12), a portion of the upper surface of the light guide body (12) opposed to the insertion portion is also a portion of the light emitting surface (12a).

2. The induction heating cooker (20) according to claim 1, wherein in the light guide body (12), light lead-in portions (23a) adjacent to the insertion portion in a circumferential direction of the light guide body (12) are continuous through a light lead-in portion (23b) positioned between the upper surface of the light guide body (12) and the insertion portion.

3. The induction heating cooker (20) according to any one of claims 1 to 2, wherein the light source (11) comprises a substrate and two chip LEDs (21) mounted on respective surfaces of the substrate and light from each chip LED (21) enters the light guide body (12) through opposed side surfaces of the insertion portion of the light guide body (12).

4. The induction heating cooker (20) according to any one of claims 1 to 3, wherein the light source (11) comprises a substrate and a chip LED (21) mounted on the substrate, a width dimension of the insertion portion in a circumferential direction of the light guide body (12) is set in conformity with a thickness dimension of the substrate and that of the chip LED (21), and a position of the light source (11) is regulated by the insertion portion.

## Patentansprüche

1. Induktionsheizungsherd (20) enthaltend:
ein Gehäuse (1);
eine lichtdurchlässige Deckplatte, die auf einer oberen Fläche des Gehäuses (1) montiert ist;
eine Induktionsheizspule (3), die so betrieben werden kann, dass sie einen auf die Deckplatte gestellten Kochbehälter durch Induktionsheizung erwärmt;
einen linearen Leuchtkörper (10), der an einem Außenumfang der Induktionsheizspule (3), von oberhalb der Deckplatte aus gesehen, vorgesehen ist, um Licht entlang eines Teils oder eines gesamten Umfangs der Induktionsheizspule (3) zu emittieren;
wobei der lineare Leuchtkörper (10) eine Lichtquelle (11) und einen ringförmigen oder kreisbogenförmigen Lichtleiterkörper (12) enthält; und
der Lichtleiterkörper (12) einen Einführungsabschnitt aufweist, durch den die Lichtquelle (11) innerhalb des Lichtleiterkörpers (12) angeordnet ist,
wobei Licht von der Lichtquelle (11), die innerhalb des Einführungsabschnitts angeordnet ist, durch eine Seitenfläche des Einführungsabschnitts in den Lichtleiterkörper (12) eintritt, und eine obere Fläche des Lichtleitkörpers (12) eine lichtemittierende Fläche (12a) ist,
**dadurch gekennzeichnet, dass**
der lineare Leuchtkörper (10) eine Chip-LED (21) als Lichtquelle enthält und der Einführungsabschnitt des Lichtleiterkörpers (12) eine in einer Bodenfläche (12b) des Lichtleiterkörpers (12) ausgebildete Nut (23) oder ein sich durch eine innere Umfangsfläche und eine äußere Umfangsfläche des Lichtleiterkörpers (12) erstreckendes Durchgangsloch ist, und dadurch, dass in dem Lichtleiterkörper (12) ein Teil der oberen Fläche des Lichtleiterkörpers (12), der dem Einführungsabschnitt gegenüberliegt, ebenfalls ein Teil der lichtemittierenden Fläche (12a) ist.

2. Induktionsheizungsherd (20) nach Anspruch 1, wobei in dem Lichtleiterkörper (12) Lichteinführungsabschnitte (23a), die in einer Umfangsrichtung des Lichtleiterkörpers (12) an den Einführungsabschnitt angrenzen, durch einen Lichteinführungsabschnitt (23b), der zwischen der oberen Oberfläche des Lichtleiterkörpers (12) und dem Einführungsabschnitt angeordnet ist, zusammenhängend sind.

3. Induktionsheizungsherd (20) nach einem der Ansprüche 1 bis 2, wobei die Lichtquelle (11) ein Substrat und zwei Chip-LEDs (21) enthält, die auf jeweiligen Flächen des Substrats angebracht sind, und Licht von jeder Chip-LED (21) in den Lichtleiterkörper (12) durch gegenüberliegende Seitenflächen des Einführungsabschnitts des Lichtleitkörpers (12) eintritt.

4. Induktionsheizungsherd (20) nach einem der Ansprüche 1 bis 3, wobei die Lichtquelle (11) ein Substrat und eine auf dem Substrat angebrachte Chip-LED (21) enthält, wobei eine Breitenabmessung des Einführungsabschnitts in einer Umfangsrichtung des Lichtleiterkörpers (12) in Übereinstimmung mit einer Dickenabmessung des Substrats und derjenigen der Chip-LED (21) festgelegt ist, und eine Position der Lichtquelle (11) durch den Einführungsabschnitt bestimmt wird.

## Revendications

1. Appareil de cuisson à chauffage par induction (20) comprenant :
un boîtier de corps (1) ;
une plaque supérieure translucide montée sur une surface supérieure du boîtier de corps (1) ;
une bobine de chauffage par induction (3) pouvant être actionnée pour chauffer un récipient de cuisson placé sur la plaque supérieure par chauffage par induction ;
un corps lumineux linéaire (10) disposé au niveau d'une périphérie externe de la bobine de chauffage par induction (3), tel qu'observé à partir du dessus de la plaque supérieure, pour émettre de la lumière le long d'une partie ou d'une périphérie entière de la bobine de chauffage par induction (3) ;
le corps lumineux linéaire (10) comprenant une source de lumière (11) et un corps de guidage de lumière en forme d'anneau ou d'arc circulaire (12) ; et
le corps de guidage de lumière (12) présentant une partie d'insertion via laquelle la source de lumière (11) est disposée à l'intérieur du corps de guidage de lumière (12),
la lumière provenant de la source de lumière (11) disposée à l'intérieur de la partie d'insertion entrant dans le corps de guidage de lumière (12) via une surface latérale de la partie d'insertion et une surface supérieure du corps de guidage de lumière (12) étant une surface d'émission de lumière (12a),
**caractérisé en ce que**
le corps lumineux linéaire (10) comprend une DEL à puce (21) en tant que source de lumière et la partie d'insertion du corps de guidage de lumière (12) est une rainure (23) formée dans une surface inférieure (12b) du corps de guidage de lumière (12) ou un trou traversant s'étendant à travers une surface périphérique interne et une surface périphérique externe du corps de guidage de lumière (12) et **en ce que**, dans le corps de guidage de lumière (12), une partie de la surface supérieure du corps de guidage de lumière (12) opposée à la partie d'insertion est également une partie de la surface d'émission de lumière (12a).

2. Appareil de cuisson à chauffage par induction (20) selon la revendication 1, où, dans le corps de guidage de lumière (12), des parties d'entrée de lumière (23a) adjacentes à la partie d'insertion dans une direction circonférentielle du corps de guidage de lumière (12) sont continues à travers une partie d'entrée de lumière (23b) positionnée entre la surface supérieure du corps de guidage de lumière (12) et la partie d'insertion.

3. Appareil de cuisson à chauffage par induction (20) selon l'une quelconque des revendications 1 à 2,
la source de lumière (11) comprenant un substrat et deux DEL à puce (21) montées sur des surfaces respectives du substrat et de la lumière provenant de chaque DEL à puce (21) entrant dans le corps de guidage de lumière (12) via des surfaces latérales opposées de la partie d'insertion du corps de guidage de lumière (12).

4. Appareil de cuisson à chauffage par induction (20) selon l'une quelconque des revendications 1 à 3,
la source de lumière (11) comprenant un substrat et une DEL à puce (21) montée sur le substrat, une dimension de largeur de la partie d'insertion dans une direction circonférentielle du corps de guidage de lumière (12) étant réglée en conformité avec une dimension d'épaisseur du substrat et avec celle de la DEL à puce (21) et une position de la source de lumière (11) étant régulée par la partie d'insertion.
